(19) Europäisches Patentamt
European Patent Office
Office européen des brevets

(11) **EP 3 087 114 B1**

(12) **EUROPEAN PATENT SPECIFICATION**

(45) Date of publication and mention
of the grant of the patent:
**15.04.2020 Bulletin 2020/16**

(21) Application number: **14873502.0**

(22) Date of filing: **18.12.2014**

(51) Int Cl.:
*C08G 18/10* (2006.01)          *C08G 63/60* (2006.01)
*C08G 65/34* (2006.01)          *C09J 175/04* (2006.01)
*C08G 18/48* (2006.01)          *C08G 18/63* (2006.01)
*C09J 175/08* (2006.01)          *C08G 65/333* (2006.01)
*C08G 65/26* (2006.01)          *C08G 18/81* (2006.01)
*C08G 18/76* (2006.01)

(86) International application number:
**PCT/US2014/071142**

(87) International publication number:
**WO 2015/100128 (02.07.2015 Gazette 2015/26)**

(54) **ADHESIVE CONTAINING HIGH SOLID COPOLYMER POLYOL POLYURETHANE PREPOLYMER**

KLEBSTOFF MIT HOCHFESTEM COPOLYMERPOLYOLPOLYURETHANPREPOLYMER

ADHÉSIF CONTENANT UN PRÉPOLYMÈRE POLYOL POLYURÉTHANNE DE TYPE COPOLYMÈRE À TENEUR ÉLEVÉE EN SOLIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2013 US 201361920075 P**

(43) Date of publication of application:
**02.11.2016 Bulletin 2016/44**

(73) Proprietor: **Dow Global Technologies LLC Midland, MI 48674 (US)**

(72) Inventors:
• **KRISHNAMOORTHY, Jayaraman**
  **Pearland, TX 77584 (US)**
• **KOONCE, William, A.**
  **Midland, Michigan 48674 (US)**
• **VAN DER WAL, Hanno, R.**
  **NL-4542 BP Hoek (NL)**
• **SCHROCK, Alan, K.**
  **Pensacola, FL 37504 (US)**

(74) Representative: **Beck Greener LLP**
**Fulwood House**
**12 Fulwood Place**
**London WC1V 6HR (GB)**

(56) References cited:
**EP-A2- 0 275 908          WO-A1-01/49802**
**WO-A1-2012/151085          US-A- 5 169 895**
**US-A1- 2002 061 962          US-A1- 2005 049 358**
**US-A1- 2006 149 020          US-A1- 2008 064 844**
**US-A1- 2010 222 448**

**Description**

FIELD OF THE INVENTION

This invention relates to adhesives. In one aspect the invention relates to adhesives comprising a polyurethane prepolymer while in another aspect, the invention relates to adhesives comprising high solid copolymer polyol (HSCPP) polyurethane prepolymer.

BACKGROUND OF THE INVENTION

Copolymer polyol (CPP) is a stable dispersion of solid copolymer particles in a base polyol. The solid copolymer particles are generated from two monomers, e.g., styrene and acrylonitrile. The concentration of polymeric particles in industrial CPP products usually varies between 10 and 43 wt% depending upon manufacturing technology and application. CPP is used to produce, among other things, slabstock and molded polyurethane foams. The solid particles in the CPP add hardness to the resulting foam, reduce the overall raw material cost for foam production, and act as a foam processing aid to achieve desired foam cell opening.

CPP is produced *via* a free-radical-initiated polymerization reaction in a base polyol. Polyol, stabilizer (also known as "macromer"), seed (also known as "preformed stabilizer"), and initiator are raw materials that are mixed in batch fashion in a premix section of the process. This mixture is transferred to a reactor feed tank that continuously delivers it to the reactor system. In route to the reactors, the premix material is combined with styrene and acrylonitrile monomers along with a chain transfer agent. The polymerization occurs at approximately 125°C in a loop and plug flow reactor system. A finishing section exists to remove residual, unreacted volatiles from the CPP before the product is cooled, filtered, mixed with antioxidant, and stored for customer shipment.

One advantage of HSCPP technology is related to the higher solids concentration resulting from improved stabilization technology. The greater solids content allows the final product to be diluted with base polyol to achieve existing customer solids concentration levels. This dilution translates directly into increased capacity in existing equipment. Other advantages of HSCPP technology are decreased conversion costs and less waste, which result from increased monomer conversion, and less potential for equipment fouling.

USP 5,922,809 and WO 2002/12365 teach a one-part adhesive composition comprising polyurethane prepolymer and a catalyst capable of catalyzing the reaction of isocyanate moieties with water. The polyurethane prepolymer comprises the reaction product of: (A) a polyisocyanate; (B) one or more compounds or polymers having isocyanate-reactive moieties; (C) a dispersion triol containing from 10 to 60 percent by weight based on the dispersion of particles of an organic polymer which is nonreactive with the polyols and polyisocyanates having a particle size of from 5 to 50 microns; wherein the prepolymer has a free isocyanate content of from 0.8 to 2.2 percent. WO 2002/12365 further requires that the prepolymer has a weight ratio of diol to triol and dispersion triol from 0.8 to 1.2.

While these adhesive compositions perform well, an interest remains for adhesive compositions of similar composition but with improved mechanical properties and a phase-separated structure with good flexibility at low temperature and high viscosity at room temperature.

SUMMARY OF THE INVENTION

In one embodiment the invention is a polyurethane prepolymer comprising the reaction product of:

(A) One or more polyisocyanates;
(B) One or more compounds containing on average more than one isocyanate reactive compound;
(C) A dispersion triol containing from 10 to 60 percent by weight, based on the weight of the dispersion, of particles of an organic polymer which is nonreactive with the isocyanate reactive compounds and the polyisocyanates having a particle size of less than 5 microns in a triol having a molecular weight from 4000 g/mol to 8,000 g/mol and a hydroxyl number from 30 to 75;

wherein the prepolymer has a free isocyanate content of from about greater than 2.2 to about 15 percent.

In one embodiment the invention is an adhesive composition comprising:

(A) A polyurethane prepolymer comprising:

(1) One or more polyisocyanates;
(2) One or more compounds containing on average more than one isocyanate reactive compound;
(3) A dispersion triol containing from 10 to 60 percent by weight, based on the weight of the dispersion, of particles of an organic polymer which is nonreactive with the isocyanate reactive compounds and the polyisocyanates having a particle size of less than 5 microns in a triol having a molecular weight from 4000 g/mol to 8,000 g/mol and a hydroxyl number from 30 to 75;

wherein the prepolymer has a free isocyanate content of from greater than 2.2 to 15 percent; and
(B) A catalyst capable of catalyzing the reaction of isocyanate moieties with water.

In one embodiment the invention is a process for bonding two substrates together which comprises contacting the adhesive composition of the invention with at least one of the substrates and contacting the substrates together along the portion of the substrate(s) to which the adhesive has been applied before the applied adhesive cures and allowing the adhesive to cure and bond the substrates together.

BRIEF DESCRIPTION OF THE DRAWINGS

Figure 1 is a line graph reporting the viscosity/green strength development on cooling the prepolymer of Example 1.
Figure 2 is a graph reporting the DSC analysis of the cured prepolymer used in Example 1.
Figure 3 is a line graph reporting the viscosity/green strength development on cooling the prepolymer of Example 2.

DETAILED DESCRIPTION

*Definitions*

All parts by weight relative to the components of the adhesive composition are based on 100 total parts by weight of the adhesive composition.
The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, temperature, is from 100 to 1,000, then all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, molecular weight and the relative amounts of the individual components in the composition.
"Comprising", "including", "having" and like terms mean that the composition, process, etc. is not limited to the components, steps, etc. disclosed, but rather can include other, undisclosed components, steps, etc. In contrast, the term "consisting essentially of' excludes from the scope of any composition, process, etc. any other component, step etc. excepting those that are not essential to the performance, operability or the like of the composition, process, etc. The term "consisting of' excludes from a composition, process, etc., any component, step, etc. not specifically disclosed. The term "or", unless stated otherwise, refers to the disclosed members individually as well as in any combination.
"High solid copolymer polyol (HSCPP)" and like terms mean that the polyol has a solid content of equal to or greater than (≥) 45% up to and including 75%.
"Phase separated structure" and like terms mean a material having two distinct glass transition temperatures (Tg) while maintaining phase miscibility.

*Polyisocyanate*

The urethane prepolymers have an average isocyanate functionality sufficient to allow the preparation of a crosslinked polyurethane upon cure and not so high that the polymers are unstable. Stability in this context means that the prepolymer or adhesive prepared from the prepolymer has a shelf life of at least 6 months at ambient temperature (23°C), in that it does not demonstrate an increase in viscosity during such period which prevents its application or use. Preferably the prepolymer or adhesive prepared therefrom does not undergo an increase in viscosity of more than 50 percent during the stated period. Preferably, the average isocyanate functionality is greater than 2.2 and preferably at least 2.4. Below 2.2 the ability of the prepolymer to crosslink sufficiently to achieve the desired strength of the cured adhesive is compromised. Preferably the average isocyanate functionality of the prepolymer is 3.0 or less and more preferably 2.8 or less. Above 3.0 average isocyanate functionality the prepolymer and adhesives prepared from the prepolymer may exhibit unacceptable stability.

The prepolymer preferably has a free isocyanate content which facilitates acceptable strength in adhesives prepared from the prepolymers after 60 minutes and stability of the prepolymer. Preferably, the free isocyanate content is greater than 2.2 percent by weight or greater based on the weight of the prepolymer, more preferably 2.5 percent by weight or greater, even more preferably 2.7 percent by weight or greater, and preferably 15 percent by weight or less, even more preferably 12 percent by weight or less and most preferably 10 percent by weight or less.

Preferably, the weight average molecular weight of the prepolymer is 3,000 or greater, more preferably 4,000 or greater, even more preferably 5,000 or greater and most preferably 6,000 or greater; and is preferably 20,000 or less, more preferably 15,000 or less, even more preferably 10,000 or less and most preferably 8,000 or less. The prepolymer preferably exhibits a viscosity which facilitates formulation of a pumpable adhesive which has good green strength. Preferably the viscosity of the prepolymer is 20 Pascal seconds (Pa-s) (20,000 centipoise (cps)) or less and more preferably 13 Pa-s (13,000 cps) or less, preferably 3 Pa-s (3,000 cps) or greater, and more preferably 6 Pa-s (6,000 cps) or greater and most preferably 8Pa-s (8,000 cps) or greater. The viscosity of the adhesive can be adjusted with fillers although the fillers cannot improve the green strength of the final adhesive. Below 3 Pa-s (3,000 cps) the adhesive prepared from the prepolymer may exhibit poor green strength. Above 20 Pa-s (20,000 cps) the prepolymer may be unstable and subject to gelling. The prepolymer may be prepared by any suitable method, such as by reacting one or more compounds containing on average more than one, and preferably at least about two, isocyanate-reactive groups and a dispersion triol with an excess over stoichiometry of one or more polyisocyanates under reaction conditions sufficient to form a prepolymer having isocyanate functionality and free isocyanate content which meets the criteria discussed above.

Preferable polyisocyanates for use in preparing the prepolymer include any aliphatic, cycloaliphatic, aryl aliphatic, heterocyclic or aromatic polyisocyanate, or mixture thereof, with an average isocyanate functionality of at least 2.0 and an equivalent weight of at least 80. Preferably, the isocyanate functionality of the polyisocyanate is at least 2.0, more preferably at least 2.2, and is more preferably at least 2.3; and is preferably no greater than 4.0, more preferably no greater than 3.5, and is most preferably no greater than 3.0. Higher functionalities may also be used, but their use may cause excessive crosslinking, resulting in an adhesive which is too viscous to handle and apply easily, can cause the cured adhesive to be too brittle and cause foaming due to carbon dioxide gassing. Preferably, the equivalent weight of the polyisocyanate is at least 100, more preferably at least 110, and is more preferably at least 120; and is preferably no greater than 300, more preferably no greater than 250, and is most preferably no greater than 200.

Examples of such polyisocyanates include ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3- and 1,4-diisocyanate and mixtures of these isomers; 1-isocyanato-3,3,5-trimethyl-5-isocyanato methyl cyclohexane; 2,4- and 2,6-hexahydrotolylene diisocyanate and mixtures of these isomers, hexahydrol,3-and/or 1,4-phenylene diisocyanate, perhydro-2,5'- and/or 4,4'-diphenyl methane diisocyanate, 1,3- and 1,4-phenylene diisocyanate, 2,4- and 2,6-tolylene diisocyanate and mixtures of these isomers, diphenyl methane-2,4'- and/or 4,4'-diisocyanate, naphthylene-1,5-diisocyanate, triphenyl methane-4,4',4'-tri-isocyanate, polyphenyl polymethylene polyisocyanates of the type obtained by condensing aniline with formaldehyde, followed by phosgenation such as described in British Patents 874,430 and 848,671, perchlorinated aryl polyisocyanates as described in German Auslegeschrift 1,157,601, polyisocyanates containing carbodiimide groups as described in German Patent 1,092,007, diisocyanates of the type described in USP 3,492,330, polyisocyanates containing allophanate groups of the type described in British Patent 994,890, Belgian Patent 761,626 and Dutch Patent Application No. 7,102,524, polyisocyanates containing isocyanurate groups as described in German Patents 1,022,789, 1,222,067, 1,027,394, 1,929,034 and 2,004,048, polyisocyanates containing urethane groups as described in Belgian Patent 752,261 or USP 3,394,164, polyisocyanates containing acrylated urea groups as in German Patent 1,230,778, polyisocyanates containing biuret groups as described in German Patent 1,101,392, British Patent 889,050 and French Patent 7,017,514, polyisocyanates obtained by telomerization reactions described in Belgian Patent 723,640, polyisocyanates containing ester groups as described in British Patents 965,474 and 1,072,956, USP 3,567,763 and German Patent 1,231,688 and reaction products of the aforementioned isocyanates with acetals as described in German Patent 1,072,385. Preferably the polyisocyanate is an aromatic or cycloaliphatic polyisocyanate such as diphenylmethane-4,4'-diisocyanate, isophorone diisocyanate, tetramethylxylene diisocyanate, and is most preferably diphenylmethane-4,4'-diisocyanate.

The polyisocyanates are used in a sufficient amount to form an advanced polyurethane prepolymer having free reactive isocyanate moieties. Preferably the amount of polyisocyanate is 5 percent by weight or greater based on the starting materials and more preferably 9 percent by weight or greater and preferably 20 percent by weight or less, more preferably 15 percent by weight or less and even more preferably 11 percent by weight or less.

*Isocyanate-Reactive Compound*

The term "isocyanate-reactive compound" as used herein includes water and any organic compound having on average more than one, preferably at least two, and preferably no more than 4, isocyanate-reactive moieties, such as a compound containing an active hydrogen moiety or an imino-functional compound. For the purposes of this invention, an active hydrogen moiety refers to a moiety containing a hydrogen atom which, because of its position in the molecule, displays significant activity according to the Zerewitnoff test described by Wohler in the Journal of the American Chemical Society, Vol. 49, p. 3181 (1927). Illustrative of such active hydrogen moieties are -COOH, -OH, -NH$_2$ -NH-, -CONH$_2$, -SH, and -CONH-. Typical active hydrogen-containing compounds include polyols, polyamines, polymercaptans, polyacids and compounds containing at least one oxazolidine moiety. Suitable imino-functional compounds are those which have at least one terminal imino group per molecule, such as are described, for example, in USP 4,910,279.

Preferable isocyanate-reactive compounds are polyols. The term polyol as here used includes any organic compound having on average more than one and preferably at least two, and preferably no more than four, isocyanate-reactive hydroxyl moieties.

Preferable polyols useful in the preparation of the prepolymers include, for example, polyether polyols, polyester polyols, poly(alkylene carbonate)polyols, hydroxyl-containing polythioethers, polymer polyols, and mixtures thereof. Polyether polyols are well-known in the art and include, for example, polyoxyethylene, polyoxypropylene, polyoxybutylene, and polytetramethylene ether diols and triols which are prepared by reacting an unsubstituted or halogen- or aromatic-substituted alkylene oxide with an initiator compound containing two or more active hydrogen groups such as water, ammonia, a polyalcohol, or an amine. Such methods are described, for example, in USP 4,269,9945; 4,218,543; and 4,374,210. In general, polyether polyols may be prepared by polymerizing alkylene oxides in the presence of an active hydrogen-containing initiator compound.

Preferable alkylene oxides include ethylene oxide, propylene oxide, butylene oxides, styrene oxide, epichlorohydrin, epibromohydrin, and mixtures thereof. Preferable initiator compounds include water, ethylene glycol, propylene glycol, butanediol, hexanediol, glycerin, trimethylol propane, pentaerythritol, hexanetriol, sorbitol, sucrose, hydroquinone, resorcinol, catechol, bisphenols, novolac resins, phosphoric acid, amines, and mixtures thereof.

Polyester polyols are also well-known in the art and may be prepared by reacting a polycarboxylic acid or anhydride thereof with a polyhydric alcohol. Examples of preferable polycarboxylic acids include succinic acid, adipic acid, suberic acid, azelaic acid, sebacic acid, phthalic acid, isophthalic acid, maleic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, maleic acid anhydride, glutaric acid anhydride, fumaric acid, and mixtures thereof. Examples of preferable polyhydric alcohols useful in preparing polyester polyols include ethylene glycols, propane diols, butane diols, 1,6-hexanediol, 1,8-octanediol, neopentylglycol, glycerol, trimethylol propane, pentaerythritol, quinitol, mannitol, sorbitol, methyl glycoside, diethylene glycol, triethylene glycol, tetraethylene glycol, polyethylene glycols, polypropylene glycols, and mixtures thereof.

Preferable polymer polyols include dispersions of polymers of vinyl monomers in a continuous polyol phase, particularly dispersions of styrene/acrylonitrile copolymers. Also useful are the so-called polyisocyanate polyaddition (PIPA) polyols (dispersions of polyurea-polyurethane particles in a polyol) and the polyurea dispersions in polyols (PHD polyols). Copolymer polyols of the vinyl type are described, for example, in USP 4,390,645, 4,463,107, 4,148,840 and 4,574,137.

Preferably, the polyol(s) have an average functionality of at least 1.5, more preferably at least 1.8 and most preferably at least 2.0; and is preferably no greater than 4.0, more preferably no greater than 3.5 and most preferably no greater than 3.0. Preferably, the equivalent weight of the polyol(s) is at least 200, more preferably at least 500 and more preferably at least 1,000; and is preferably no greater than 3,500, more preferably no greater than 3,000 and most preferably no greater than 2,500.

Preferably the polyol is a mixture of one or more diols and one or more triols. Preferably the one or more polyols are polyether polyols and more preferably polyoxyalkylene oxide polyols. Most preferred, however, are ethylene oxide-capped polyols prepared by reacting glycerine with propylene oxide, followed by reacting the product with ethylene oxide.

The polyols are present in an amount sufficient to react with most of the isocyanate groups of the isocyanates leaving enough isocyanate groups to correspond with the desired free isocyanate content of the prepolymer. Preferably the polyols are present in an amount of 30 percent by weight or greater based on the prepolymer, more preferably 40 percent by weight or greater and most preferably 50 percent by weight or greater. Preferably the polyols are present in an amount of 80 percent by weight or less based on the prepolymer, more preferably 75 percent by weight or less and most preferably 70 percent by weight or less. In the embodiment where the polyols comprise a mixture of diols and triols the amount of diols present is preferably 10 percent by weight or greater based on the prepolymer, more preferably 17 percent by weight or greater and most preferably 19 percent by weight or greater; and 30 percent by weight or less based on the prepolymer, more preferably 23 percent by weight or less and most preferably 21 percent by weight or less. In the embodiment where the polyols comprise a mixture of diols and triols the amount of triols present is preferably 15 percent by weight or greater based on the prepolymer, more preferably 25 percent by weight or greater and most preferably 28 percent by weight or greater; and preferably 40 percent by weight or less based on the prepolymer, more preferably 35 percent by weight or less and most preferably 32 percent by weight or less. The proportion of diol to triol is chosen to achieve the desired isocyanate functionality of the prepolymer.

*Dispersion Triol*

The prepolymer also comprises a dispersion triol having dispersed therein particles of an organic based polymer. The organic based polymer particles are chosen so as to not be reactive with the isocyanate-reactive moieties or isocyanate moieties of the isocyanates. Preferably the particles comprise a thermoplastic polymer, rubber-modified thermoplastic polymer or a polyurea dispersed in a triol. The polyurea preferably comprises the reaction product of a polyamine and a polyisocyanate. Preferable thermoplastic polymers are those based on monovinylidene aromatic monomers and copolymers of monovinylidene aromatic monomers with conjugated dienes, acrylates, methacrylates, unsaturated nitrites or mixtures thereof. The copolymers can be block or random copolymers. More preferably the particles dispersed in the triol comprise copolymers of unsaturated nitrites, conjugated dienes and a monovinylidene aromatic monomer, a copolymer of an unsaturated nitrile and a monovinylidene aromatic monomer or a polyurea. Even more preferably the particles comprise a polyurea or polystyrene-acrylonitrile copolymer with the polystyrene-acrylonitrile copolymers being most preferred.

The organic polymer particles useful in this invention described above are commonly available and well-known to those skilled in the art.

Representative monovinylidene aromatic compounds which can be employed herein include styrene, alkyl-substituted styrenes (e.g., alpha-methylstyrene and alpha-ethylstyrene) and ring-substituted styrenes (e.g., vinyl toluene, particularly para-vinyltoluene, ortho-ethylstyrene and 2,4-dimethylstyrene); ring-substituted halogenated styrenes such as chlorostyrene and 2,4-dichlorostyrene; styrenes substituted with both a halo and an alkyl group such as 2-chloro-4-methylstyrene and vinylanthracene. In general, the preferred monovinylidene aromatic compound(s) employed in preparing the styrenic polymer resin is styrene or a combination of styrene and alpha-methylstyrene (advantageously such combinations contain alpha-methylstyrene in amounts from 10 to 50, more advantageously from 15 to 40, weight percent of the total weight of the styrene and alpha-methylstyrene); with styrene being the most preferred monovinylidene aromatic compound.

Conjugated dienes useful in the block copolymer include straight- and branched-chain aliphatic hydrocarbons containing two double bonds attached to adjacent carbon atoms. Preferred dienes contain 4 to 6 carbon atoms and include butadiene, isoprene, 1,3-pentadiene, 1,3-hexadiene, 2,3-dimethylbutadiene and mixtures thereof. More preferably, such conjugated dienes contain from 4 to 5 carbon atoms and include, for example, butadiene, isoprene, cis-1,3-pentadiene, trans-1,3-pentadiene and mixtures thereof. The most preferred dienes are butadiene and isoprene.

Preferred unsaturated nitriles useful herein include acrylonitrile, ethacrylonitrile, methacrylonitrile and mixtures thereof, more preferred is acrylonitrile. In preparing copolymers useful in this invention, the amount of the unsaturated nitrile(s) most advantageously employed will vary depending on the physical and chemical properties desired in the copolymer particles. The copolymer will advantageously be derived from 5 to 35, preferably from 15 to 25, weight percent of the unsaturated nitrile(s) wherein said weight percent is based on the total weight of the polymer.

To prepare the copolymers based on styrene and optionally other unsaturated compounds, mass or a combination of mass/suspension polymerization techniques are most commonly employed. Illustrative mass polymerization techniques are described in USP 2,727,884 and 4,782,127. Processes for the preparation of block copolymers of monovinylidene aromatic monomers and conjugated dienes are described in USP 5,242,984 and 5,134,968.

Preferably the triol is a polyether triol and more preferably a polyoxyalkylene based triol. Preferably, such polyoxyalkylene oxide triol comprises a polyoxypropylene chain with a polyoxyethylene end cap. Such materials are well known in the art and initiators and alkylene oxides which may be used in the preparation of the triol are described above. A particularly preferred polyether triol is a 1,2,3-propane triol initiated polyoxypropylene with a polyoxyethylene end cap. Preferably such triol has molecular weight of 4,000 or greater, more preferably 5,000 or greater and most preferably 6,000 or greater, grams per mole (g/mol). Preferably such triol has molecular weight of 8,000 or less and more preferably 7,000 or less, g/mol. Below 4,000 molecular weight the elongation and impact properties of the finally cured adhesive are too low for the intended use. Above a molecular weight of 8,000 the adhesive prepared from the prepolymer is too elastomeric for the intended use. The triol preferably has a hydroxyl number which is high enough such that the adhesive prepared from the prepolymer cures rapidly enough and provides the desired open times. If the hydroxyl number is too low the adhesive cures too slowly and the desired open times and drive-away times cannot be achieved. The hydroxyl number should not be so high as to reduce the elongation of the cured adhesive prepared from the prepolymer. Preferably, the hydroxyl number of the triol is 30 or greater and more preferably 40 or greater. Preferably, the hydroxyl number of the triol is 75 or less and more preferably 60 or less.

The organic polymer particles dispersed in the triol preferably have a particle size which is large enough to improve the impact properties and elastomeric properties of the finally cured adhesive, but not so large so as to reduce the ultimate strength of the adhesive after about 60 minutes of cure. Preferably the particle size is 0.1 micron or greater and more preferably the particle size is 0.5 micron or greater. Preferably the particle size is less than 5 microns, and more preferably the particle size is 1 micron or less. The triol dispersion contains a sufficient amount of organic polymer particles such that the adhesive upon cure has sufficient hardness for the desired use and not so much such that the cured adhesive has too much elasticity as defined by elongation. Preferably the dispersion contains 20 percent by weight or greater of organic polymer particles copolymer based on the dispersion, preferably 30 percent by weight or greater and more preferably 45 percent by weight or greater. Preferably the dispersion contains 65 percent by weight or less of organic polymer particles based on the dispersion, preferably 60 percent by weight or less and more preferably 55 percent by weight or less.

The dispersion of organic polymer particles in a triol is present in the prepolymer in an amount of 9 percent by weight or greater of the prepolymer and more preferably 10 percent by weight or greater, and 18 percent by weight or less of the prepolymer and more preferably 12 percent by weight or less.

In one embodiment the thermoplastic polymer particles may be rubber-modified. Generally this involves blending an elastomeric or rubbery polymer with the thermoplastic polymer. A preferred rubbery material is acrylonitrile-butadiene-styrene interpolymer. Preferably, the rubber-modified thermoplastic polymer particles contain 15 to 25 percent by weight of rubber polymer particles.

In one embodiment the organic polymer particles comprise a polyurea, comprising the reaction product of a polyamine and a polyisocyanate. The polyurea preferably does not react with isocyanate-reactive moieties or isocyanate moieties. Preferably, the polyurea is prepared by the reaction of a polyamine, preferably a diamine, with a polyisocyanate, preferably a diisocyanate. The polyurea and polyamine are mixed and undergo immediate reaction at room temperature. Thereafter the polyurea is contacted with triols, preferably under high shear conditions to disperse the polyurea into the triol. Preferably the isocyanate used to prepare the polyurea is a cycloaliphatic or aliphatic polyisocyanate, as the use of cycloaliphatic and aliphatic isocyanates facilitate handling and stability of the polyurea. Preferably the polyurea has a urea functionality of 8 percent or greater, more preferably 10 percent or greater and most preferably 15 percent or greater. Preferably the polyurea has a functionality of 40 percent or less and more preferably 20 percent or less. Functionality as used herein relative to polyureas refers to weight percent of urea groups present in the polyurea.

The polyurethane prepolymers of the invention may further comprise a plasticizer. The plasticizers useful in the prepolymer are common plasticizers useful in polyurethane adhesive applications and well known to those skilled in the art. The plasticizer is present in an amount sufficient to disperse the prepolymer in the final adhesive composition. The plasticizer can be added to the adhesive either during preparation of the prepolymer or during compounding of the adhesive composition. Preferably the plasticizer is present in 1 percent by weight or greater of the prepolymer formulation (prepolymer plus plasticizer), more preferably 18 percent by weight or greater and most preferably 22 percent by weight or greater. Preferably the plasticizer is present in 32 percent by weight or less of the prepolymer formulation and more preferably 25 percent by weight or less.

*Prepolymer Preparation*

The polyurethane prepolymer may be prepared by any suitable method, such as bulk polymerization and solution polymerization. The reaction to prepare the prepolymer is carried out under anhydrous conditions, preferably under an inert atmosphere such as a nitrogen blanket, to prevent crosslinking of the isocyanate groups by atmospheric moisture. The polyurethane prepolymer is preferably prepared by contacting the dispersion triol and the compounds or polymers containing isocyanate-reactive groups in the absence of catalyst and heating the mixture to 45°C or greater, more preferably 48°C or greater. The mixture is heated to a temperature of 55°C or less, more preferably 49°C or less. The polyisocyanate is then added to the mixture and the mixture is subjected to mixing so as to evenly disperse the polyisocyanate in the reaction mixture. Thereafter the polyurethane catalyst is added. After addition of the catalyst an exotherm generally results, preferably the exotherm peak is 58°C or greater and more preferably 60°C or greater. Preferably the exotherm peak is 70°C or less, more preferably 65°C or less. Above 70°C the reaction mixture gels. Thereafter plasticizer may be added after the exotherm recedes, that is the temperature drops, to dilute the reactants and quench the reaction. The reaction should be run such that all free isocyanate-reactive moieties are reacted with isocyanate moieties.

The reaction mixture preferably contains a standard polyurethane catalyst. Examples of such catalysts include the stannous salts of carboxylic acids, such as stannous octoate, stannous oleate, stannous acetate, and stannous laureate; dialkyltin dicarboxylates, such as dibutyltin dilaurate and dibutyltin diacetate; tertiary amines and tin mercaptides. Preferably, the reaction to prepare the prepolymer is catalyzed by stannous octoate. The amount of catalyst employed is generally between 0.005 and 5 percent by weight of the mixture catalyzed, depending on the nature of the isocyanate.

*Adhesive Composition*

The polyurethane prepolymers are present in the adhesive composition in an amount sufficient such that when the resulting adhesive cures substrates are bound together. Preferably the lap shear strengths of bonds so formed is 30 psi (206 kPa) or greater after 60 minutes and more preferably after 30 minutes. Preferably the polyurethane prepolymers are present in an amount of 55 parts by weight of the adhesive composition or greater, more preferably 60 parts by weight or greater and most preferably 69 parts by weight or greater. Preferably the polyurethane prepolymers are present in an amount of 80 parts by weight of the adhesive composition or less, more preferably 75 parts by weight or less and even more preferably 70 parts by weight or less.

The adhesive of the invention may be formulated with fillers and additives known in the prior art for use in adhesive compositions. By the addition of such materials physical properties such as viscosity flow rates and the like can be modified. However, to prevent premature hydrolysis of the moisture sensitive groups of the polyurethane prepolymer, fillers should be thoroughly dried before addition to the prepolymer.

Optional components of the adhesive of the invention include reinforcing fillers. Such fillers are well known to those skilled in the art and include carbon black, titanium dioxide, calcium carbonate, surface treated silicas, titanium oxide, fume silica, talc, and the like. Preferred reinforcing fillers comprise carbon black. In one embodiment more than one reinforcing filler may be used, of which one is carbon black and a sufficient amount of carbon black is used to provide the desired black color to the adhesive. The reinforcing fillers are used in sufficient amount to increase the strength of the adhesive and to provide thixotropic properties to the adhesive. Preferably the reinforcing filler is present in an amount of 1 part by weight of the adhesive composition or greater, more preferably 15 parts by weight or greater and most preferably 17 parts by weight or greater. Preferably the reinforcing filler is present in an amount of 40 parts by weight of the adhesive composition or less, more preferably 25 parts by weight or less and most preferably 23 parts by weight or less.

Among optional materials in the adhesive composition are clays. Preferred clays useful in the invention include kaolin, surface treated kaolin, calcined kaolin, aluminum silicates and surface treated anhydrous aluminum silicates. The clays can be used in any form which facilitates formulation of a pumpable adhesive. Preferably the clay is in the form of pulverized powder, spray-dried beads or finely ground particles. Clays may be used in an amount of 0 parts by weight of the adhesive composition or greater, more preferably 1 part by weight or greater and even more preferably 6 parts by weight or greater. Preferably the clays are used in an amount of 20 parts by weight or less of the adhesive composition and more preferably 10 parts by weight or less.

The adhesive composition of the invention may further comprise a catalyst known for promoting the cure of polyurethanes in the presence of moisture. Preferable catalysts include metal salts such as tin carboxylates, organo silicon titanates, alkyl titanates, bismuth carboxylates, and dimorpholinodiethyl ether or alkyl-substituted dimorpholinodiethyl ethers. Among preferred catalysts are bismuth octoate, dimorpholinodiethyl ether and (di-(2-(3,5-dimethylmorpholino)ethyl)) ether. Such catalysts, when employed are preferably employed in an amount based on the weight of the adhesive composition of 0 parts by weight or greater, more preferably 0.1 parts by weight or greater, even more preferably 0.2 parts by weight or greater and most preferably 0.4 parts by weight or greater. Such catalysts are preferably employed in an amount, based on the weight of the adhesive composition of 5 parts by weight or less, more preferably 1.75 parts by weight or less, even more preferably 1 part by weight or less and most preferably 0.6 parts by weight or less.

The adhesive composition of this invention may further comprise plasticizers so as to modify the rheological properties to a desired consistency. Such materials should be free of water, inert to isocyanate groups and compatible with a polymer. Suitable plasticizers are well known in the art and preferable plasticizers include alkyl phthalates such as dioctylphthalate or dibutylphthalate, partially hydrogenated terpene commercially available as "HB-40", trioctyl phosphate, epoxy plasticizers, toluene-sulfamide, chloroparaffins, adipic acid esters, castor oil, toluene and alkyl naphthalenes. The amount of plasticizer in the adhesive composition is that amount which gives the desired rheological properties and which is sufficient to disperse the catalyst in the system. The amounts disclosed herein include those amounts added during preparation of the prepolymer and during compounding of the adhesive. Preferably plasticizers are used in the adhesive composition in an amount of 0 parts by weight or greater based on the weight of the adhesive composition, more preferably 5 parts by weight or greater and most preferably 10 parts by weight or greater. The plasticizer is preferably used in an amount of 45 parts by weight or less based on the total amount of the adhesive composition and more preferably 40 parts by weight or less.

The adhesive of this invention may further comprise stabilizers which function to protect the adhesive composition from moisture, thereby inhibiting advancement and preventing premature crosslinking of the isocyanates in the adhesive formulation. Included among such stabilizers are diethylmalonate and alkylphenol alkylates. Such stabilizers are preferably used in an amount of 0.1 parts by weight or greater based on the total weight of the adhesive composition, preferably 0.5 parts by weight or greater and more preferably 0.8 parts by weight or greater. Such stabilizers are used in an amount of 5.0 parts by weight or less based on the weight of the adhesive composition, more preferably 2.0 parts by weight or less and most preferably 1.4 parts by weight or less.

Optionally the adhesive composition may further comprise a thixotrope. Such thixotropes are well known to those skilled in the art and include alumina, limestone, talc, zinc oxides, sulfur oxides, calcium carbonate, perlite, slate flour, salt (NaCl), cyclodextrin and the like. The thixotrope may be added to the adhesive of composition in a sufficient amount to give the desired rheological properties. Preferably the thixotrope is present in an amount of 0 parts by weight or greater based on the weight of the adhesive composition, preferably 1 part by weight or greater. Preferably the optional thixotrope is present in an amount of 10 parts by weight or less based on the weight of the adhesive composition and more preferably 2 parts by weight or less.

Other components commonly used in adhesive compositions may be used in the adhesive composition of this invention. Such materials are well known to those skilled in the art and may include ultraviolet stabilizers and antioxidants and the like.

The adhesive composition of this invention may be formulated by blending the components together using means well-known in the art. Generally the components are blended in a suitable mixer. Such blending is preferably conducted in an inert atmosphere in the absence of oxygen and atmospheric moisture to prevent premature reaction. It may be advantageous to add any plasticizers to the reaction mixture for preparing the isocyanate containing prepolymer so that such mixture may be easily mixed and handled. Alternatively, the plasticizers can be added during blending of all the components. Once the adhesive composition is formulated, it is packaged in a suitable container such that it is protected from atmospheric moisture and oxygen. Contact with atmospheric moisture and oxygen could result in premature crosslinking of the polyurethane prepolymer-containing isocyanate groups.

The adhesive composition of the invention is used to bond porous and nonporous substrates together. The adhesive composition is applied to a substrate and the adhesive on the first substrate is thereafter contacted with a second substrate. In preferred embodiments the surfaces to which the adhesive is applied are cleaned and primed prior to application; see for example USP 4,525,511, 3,707,521 and 3,779,794. Generally the adhesives of the invention are applied at ambient temperature (23°C) in the presence of atmospheric moisture. Exposure to atmospheric moisture is sufficient to result in curing of the adhesive. Curing can be accelerated by the addition of additional water or by applying heat to the curing adhesive by means of convection heat, microwave heating and the like. Preferably the adhesive of the invention is formulated to provide a working time of 6 minutes or greater, more preferably 10 minutes or greater. Preferably the working time is 15 minutes or less and more preferably 12 minutes or less.

The adhesive composition is preferably used to bond glass to other substrates such as metal or plastics. In a preferred embodiment the first substrate is a glass window and the second substrate is a window frame. In another preferred embodiment the first substrate is a glass window and the second substrate is a window frame of an automobile.

Preferably the adhesive compositions of the invention demonstrate a lap shear strength after 60 minutes from application to substrates of 30 psi (206 kPa) or greater, more preferably 60 psi (412 kPa) or greater and most preferably 80 psi (548 kPa) or greater. Lap shears are determined according to ASTM D-3163. Preferably the cured adhesive compositions of the invention demonstrate an elongation of 300 percent or greater as determined according ASTM D-638-91 and preferably greater than about 600 percent. Preferably the elongation is 700 percent or less.

Viscosities are determined using a Brookfield Viscometer, Model RVT at standard conditions of 22.2°C (72°F) and 50% RH and using the following procedure. The viscometer is calibrated using silicone oils of known viscosities, which vary between 5 Pa-s to 50 Pa-s (5,000 cps to 50,000 cps). A set of RV spindles that attach to the viscometer are used for the calibration. All measurements are done using the No. 5 spindle at a speed of 1 revolution per second for 5 minutes until the viscometer equilibrates. The viscosity corresponding to the equilibrium reading is then calculated using the calibration.

Molecular weights are determined using a Waters Model 590 Gel Permeation Chromatograph and using the following procedure. The unit is connected to a multiwavelength detector and a differential refractometer to measure the elution volume. A column of STYROGEL™ chromatographic packing resin is used for the size exclusion and it can determine molecular weights from 250 to 50,000. The molecular weight of the prepolymer is then determined by measuring the elution volume through this column using tetrahydrofuran as the eluting solvent. The molecular weight is then calculated from a calibration curve of molecular weight versus elution volume obtained from a polystyrene polyethylene glycol column. The quoted molecular weights are weight average molecular weights expressed in grams per mole unless otherwise specified.

In reference to polyurethane prepolymers, average isocyanate functionality is determined according to the following formula,

$$\frac{\text{Moles diol-NCO adduct x diol-NCO functionality}}{\text{Moles diol-NCO adduct + moles triol-NCO adduct + moles excess polyisocyanate monomer}}$$

where the numerator is:

Moles diol-NCO adduct x diol-NCO functionality

\+ Moles triol-NCO adduct x triol-NCO functionality

\+ Moles excess polyisocyanate monomer x its functionality

wherein the moles of excess polyisocyanate monomer are calculated according to the following formula:

$$\text{moles of isocyanate} - (2\text{x moles of diol} + 3\text{x moles of triol})$$

and the moles of isocyanate, diol and triol are based on the amount of each in the starting formulation.

The theoretical average molecular weight of the prepolymer is calculated as equal to the average isocyanate functionality times the isocyanate equivalent weight of the prepolymer.

Functionality of the raw material is generally disclosed by the raw material supplier. It can be determined empirically by means of titrating the polyol or isocyanate to determine the average number functional group per molecule. One skilled in the art knows how to determine the functionality based on data developed by titration.

The high-performance adhesive compositions of this invention are based on HSCPP that has improved mechanical properties for the cured prepolymer at room temperature due to the presence of glassy organic particles, and a phase separated structure with good flexibility at low temperatures (due to a low Tg component) and high viscosity at room temperature (due to a high Tg component). The polyurethane prepolymer can be prepared by the reaction between HSCPP (glassy organic particles stabilized by a polyol base) and isocyanate molecules with/without polyether polyol and used to prepared high performance adhesive compositions. The glassy particles have a Tg of approximately 100°C, and the presence of these particles aid in providing the adhesive with high strength. The adhesive composition can be either a one or two part composition, preferably a one-part composition. Alternative uses for the compositions of this invention include, but are not limited to, reactive adhesives, hot-melt adhesives, elastomers, coatings and foam.

The prepolymer of this invention has, as compared to the prepolymers of USP 5,922,809, wider latitude in the free NCO content and the polyol used in the periphery of the particle helps in realizing much improved mechanical properties.

EXAMPLES

*Example 1: High Solids Copolymer Polyols (HSCPP)*

High solids, low-viscosity styrene-acrylonitrile (SAN) copolymer polyols (CPP) can be produced by using a highly efficient stabilizer obtained by the radical polymerization of a polyol based macromonomer with SAN in an organic solvent. Common solvents like cumene, ethylbenzene, toluene and low molecular weight alkanes, ethers or alcohols can be used in the dispersion polymerization of ethylenically unsaturated monomers in polyether polyols to lower the viscosity of the final dispersion (after removal of the solvent).

This type of dispersion polymerization is usually carried out by free radical polymerization of ethylenically unsaturated monomers in polyether polyols using organic peroxide(s) or azo type of radical initiators in combination with a chain transfer agent. The solvents can be used as a diluent for the polyether polyol during the free radical polymerization or as the sole carrier to prepare dispersions with low total polymer content, which can subsequently be used as a seed in the final dispersion preparation. The particles of these dispersions can be so small that the dispersions appears totally transparent or slightly bluish (Tyndall effect). The dispersion polymerization can be carried out in a batch reactor or run in a continuous way using one or more continuous stirred tank reactors in series or in combination with plug flow reactors. Polymer particle stabilizers can be prepared from a polyether polyol having induced unsaturation by reacting the polyol with an ethylenically unsaturated monomer having a hydrogen reactive group like a carboxylic acid, ester, epoxy, isocyanate or anhydride. Examples of such stabilizers include maleic anhydride, vinyltrimethoxysilane, hydroxyethylmethacrylate, dimethyl m-isopropenylbenzylisocyanate, glycidyl acrylate or using a ethylenically unsaturated monomers with one or more active hydrogen atoms, which can be used as a starter produce a polyether polyol. The polymer particle stabilizer can be pre-reacted with part of the ethylenically monomers in the presence of the solvent or used directly in the presence of the solvent to produce dispersion with higher solids content and lower viscosity.

*Formation of Stabilizer Precursor (Macromer)*

The stabilizer is manufacture using sorbitol-based polyol with an ethylene oxide (EO) cap and iso-propenyl dimethyl benzyl isocyanate (TMI) in the presence of an antioxidant (4-t-butylcatechol) and a tin catalyst (DABCO T-12) (see Table 1). The reaction is allowed to continue to completion in a batch reactor system. The antioxidant/inhibitor tert-butylcatechol (TBC) in toluene is also added to the mixture to extend stabilizer shelf-life. The stabilizer is an intermediate product that is stored and then later used to generate the seed and HSCPP products.

Table 1: HSCPP Stabilizer Components

| HSCPP StabilizerComponents | Function | Wt% |
|---|---|---|
| Sorbitol polyol | Base polyol | 99.20 |
| Isopropenyl dimethyl benzyl isocyanate (TMI) | Reactant | 0.76 |
| 4-t-Butylcatechol in 45% toluene (TBC in toluene) | Antioxidant/Inhibitor | 0.03 |
| Dibutyltin dilaurate (DABCO T-12) | Catalyst | 0.01 |
| **Stabilizer** | | **100.00** |

*Formation of Preformed Stabilizer (PFS or Seed)*

Seed (also referred to as "preformed stabilizer" or PFS) is a solution-dispersion of 3.5-5.0% styrene-acrylonitrile (SAN) copolymer in a base polyol with a high level of stabilizer to support the dispersion polymerization process. Seed is essentially a very low solids CPP product with a high concentration of stabilizer. Feeding seed to the reactor system during HSCPP manufacture helps control the particle size of the solids in the final CPP products and prevents the continuous process from instability phenomena.

The seed in HSCPP technology is a liquid with a blue tint. The polymer particles in HSCPP seed are much smaller than the final HSCPP products, and no solids are typically visible when observing a HSCPP seed sample without magnification. The optimal particle size of HSCPP seed is less than 0.2 micron.

The HSCPP seed incorporates toluene as a solvent. The toluene in the HSCPP seed increases and controls the polyol-SAN grafting during PFS production. The base polyol for the seed is the same sorbitol-based polyol used in stabilizer production. The raw materials used in the seed production process are summarized in Table 2.

Table 2: HSCPP Seed Components

| HSCPP PIPS Components | Function | Wt% |
|---|---|---|
| Stabilizer | Stabilizer | 36.0 |
| Sorbitol polyol | Base polyol | 30.9 |
| Toluene | Solvent | 25.0 |
| Styrene | Monomer | 5.6 |
| Acrylonitrile | Monomer | 2.4 |
| Trigonox 27 | Initiator | 0.075 |
| **seed** | | **100.00** |

*Production of CPP1 HSCPP*

CPP1 is a high solids CPP product (solids content typically between 48 and 52 weight percent with a typical particle size of 1.0 to 1.5 micron). The chain transfer agent (CTA) for CPP1 is n-DDM (n-dodecylmercaptan). The raw materials used in the CPP1 production process are summarized in Table 3.

Table 3: CPP1 HSCPP Components

| Component | Function | Wt% |
|---|---|---|
| Polyol 1* | Base polyol | 42.75 |

(continued)

| Component | Function | Wt% |
|---|---|---|
| Styrene | Monomer | 30.00 |
| Acrylonitrile | Monomer | 20.00 |
| Stabilizer | Stabilizer | 4.00 |
| Seed | Seed | 2.60 |
| n-DDM | Chain transfer agent | 0.50 |
| Trigonox 27 | Initiator | 0.15 |
| HSCPP | | **100.00** |
| *Polyol 1 is a polyoxypropylene-polyoxyethylene (20% EO cap) triol having a hydroxyl number of 34-37. | | |

*Example 2*

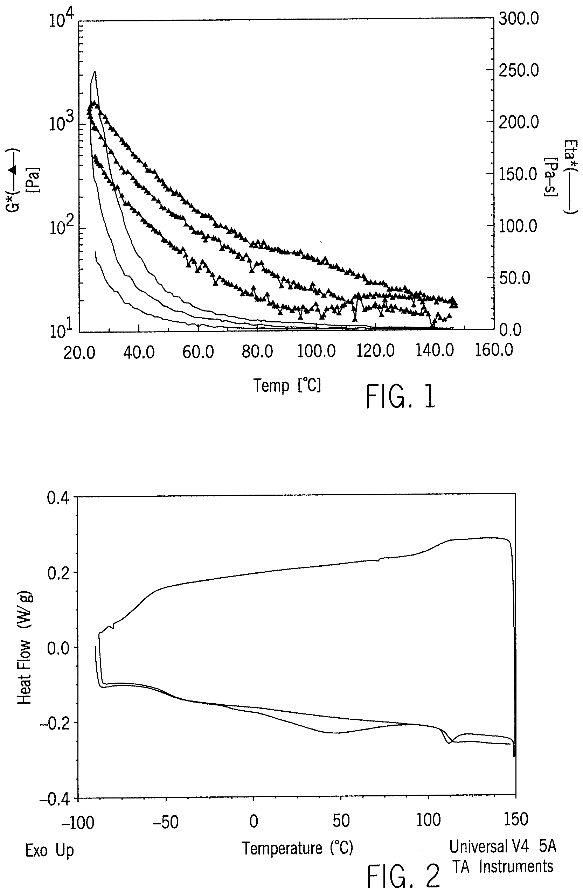

18.45 g of 4,4'-Methylene bis(phenylene isocyanate) is charged into a round bottom (RB) flask fitted with a thermocouple, mechanical stirrer, nitrogen inlet and outlet and heated to 40°C and 81.52 g of polyol, CPP1 is added with constant stirring. The RB is then heated to and maintained at 70°C for 3.5 hours. The prepolymer thus obtained is transferred and stored. Analyses of the prepolymer determined NCO content to be 5.16%. Rheological studies of the sample are carried out al 1 Hertz (Hz) as reported in Figure 1. Differential scanning calorimetry (DSC) is carried out at a heating/cooling rate of 10°C/minute, and the results are reported in Figure 2.

*Example 3*

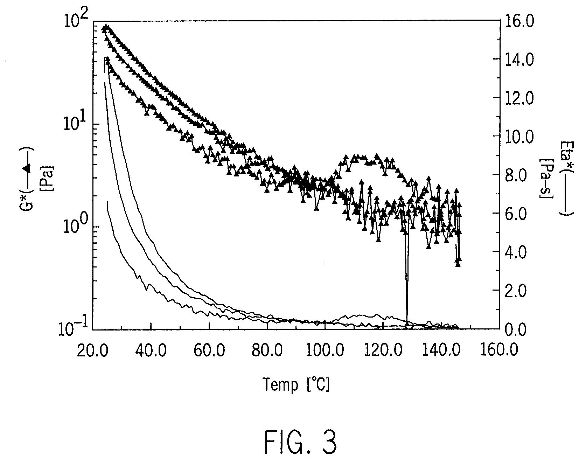

27.76 g of 4,4'-Methylene bis(phenylene isocyanate) is charged into a round bottom flask (RB) fitted with a thermocouple, mechanical stirrer, nitrogen inlet and outlet and heated to 40°C and 34.69 g of polyol, CPP1 and 38.12g of VORANOL 4240 (a polyether polyol with a nominal 4000 molecular weight diol based on propylene oxide with ethylene oxide capping and available from The Dow Chemical Company) is added with constant stirring. The RB is then heated to and maintained at 70°C for 3.5 hours. The prepolymer thus obtained is transferred and stored. Analyses of the prepolymer determined NCO content to be 7.68%. Rheological studies of the sample are carried out at 1 Hz as reported in Figure 3. DSC is carried out at a heating/cooling rate of 10°C/min.

**Claims**

1.   A polyurethane prepolymer comprising the reaction product of:

   (A) One or more polyisocyanates;
   (B) One or more compounds containing on average more than one isocyanate reactive compound;
   (C) A dispersion triol containing from 10 to 60 percent by weight, based on the weight of the dispersion, of particles of an organic polymer which is nonreactive with the isocyanate reactive compounds and the polyisocyanates having a particle size of less than 5 microns in a triol having a molecular weight from 4000 g/mol to 8,000 g/mol and a hydroxyl number from 30 to 75;

   wherein the prepolymer has a free isocyanate content of greater than 2.2 to 15 percent.

2.   The polyurethane prepolymer of Claim 1 in which the prepolymer has at least one of a free isocyanate content from 2.2 to 15 percent by weight, a weight average molecular weight from 3,000 to 20,000 g/mole, and a viscosity of greater than 3 Pa.s and less than 20 Pa.s (greater than 3,000 and less than 20,000 centipoise), as measured using a Brookfield Viscometer, Model RVT at 22.2°C and 50% RH using a No. 5 spindle at 1 revolution per second.

3.   The polyurethane prepolymer of Claim 1 or 2 in which the polyisocyanate is an aromatic or cycloaliphatic polyisocyanate.

4.   The polyurethane prepolymer of any of the preceding claims in which the polyisocyanate component comprises from 5 to 20 percent by weight.

5. The polyurethane prepolymer of any of the preceding claims in which the isocyanate reactive compound is a polyol.

6. The polyurethane prepolymer of any of the preceding claims in which the isocyanate reactive compound comprises from 30 to 80 percent by weight.

7. The polyurethane prepolymer of any of the preceding claims in which the particles of the dispersion triol comprise a polyurea or polystyrene-acrylonitrile copolymer.

8. The polyurethane prepolymer of any of the preceding claims in which the triol is a polyalkylene-based triol.

9. An adhesive composition comprising:

(A) A polyurethane prepolymer comprising:

(1) One or more polyisocyanate;
(2) One or more compounds containing on average more than one isocyanate reactive compound;
(3) A dispersion triol containing from 10 to 60 percent by weight, based on the weight of the dispersion, of particles of an organic polymer which is nonreactive with the isocyanate reactive compounds and the polyisocyanates having a particle size of less than 5 microns in a triol having a molecular weight from 4000 g/mol to 8,000 g/mol and a hydroxyl number from 30 to 75;

wherein the prepolymer has a free isocyanate content of greater than 2.2 to 15 percent; and
(B) A catalyst capable of catalyzing the reaction of isocyanate moieties with water.

10. A process for bonding two substrates together which comprises contacting the adhesive composition of Claim 9 with at least one of the substrates and contacting the substrates together along the portion of the substrate(s) to which the adhesive composition has been applied before the applied composition cures and allowing the composition to cure and bond the substrates together.

**Patentansprüche**

1. Ein Polyurethan-Präpolymer, beinhaltend das Reaktionsprodukt von:

(A) einem oder mehreren Polyisocyanaten;
(B) einer oder mehreren Verbindungen, die im Durchschnitt mehr als eine isocyanatreaktive Verbindung enthalten;
(C) einem Dispersionstriol, das bezogen auf das Gewicht der Dispersion zu 10 bis 60 Gewichtsprozent Partikel eines organischen Polymers, das mit den isocyanatreaktiven Verbindungen und den Polyisocyanaten nicht reagiert, mit einer Partikelgröße von weniger als 5 Mikrometer in einem Triol mit einem Molekulargewicht von 4 000 g/mol bis 8 000 g/mol und einer Hydroxylzahl von 30 bis 75 enthält;

wobei das Präpolymer einen Gehalt an freiem Isocyanat von mehr als 2,2 bis 15 Prozent aufweist.

2. Polyurethan-Präpolymer gemäß Anspruch 1, wobei das Präpolymer mindestens eines von einem Gehalt an freiem Isocyanat von 2,2 bis 15 Gewichtsprozent, einem gewichtsmittleren Molekulargewicht von 3 000 bis 20 000 g/Mol und einer Viskosität von mehr als 3 Pa.s und weniger als 20 Pa.s (mehr als 3 000 und weniger als 20 000 Centipoise), wie unter Verwendung eines Brookfield-Viskosimeters, Model RVT, bei 22,2 °C und 50 % RH unter Verwendung einer Spindel Nr. 5 mit 1 Umdrehung pro Sekunde gemessen, aufweist.

3. Polyurethan-Präpolymer gemäß Anspruch 1 oder 2, wobei das Polyisocyanat ein aromatisches oder cycloaliphatisches Polyisocyanat ist.

4. Polyurethan-Präpolymer gemäß einem der vorhergehenden Ansprüche, wobei die Polyisocyanatkomponente 5 bis 20 Gewichtsprozent ausmacht.

**5.** Polyurethan-Präpolymer gemäß einem der vorhergehenden Ansprüche, wobei die isocyanatreaktive Verbindung ein Polyol ist.

**6.** Polyurethan-Präpolymer gemäß einem der vorhergehenden Ansprüche, wobei die isocyanatreaktive Verbindung 30 bis 80 Gewichtsprozent ausmacht.

**7.** Polyurethan-Präpolymer gemäß einem der vorhergehenden Ansprüche, wobei die Partikel des Dispersionstriols ein Polyharnstoff- oder Polystyrol-Acrylnitril-Copolymer beinhalten.

**8.** Polyurethan-Präpolymer gemäß einem der vorhergehenden Ansprüche, wobei das Triol ein Triol auf Polyalkylenbasis ist.

**9.** Eine Klebstoffzusammensetzung, beinhaltend:

(A) ein Polyurethan-Präpolymer, beinhaltend:

(1) ein oder mehrere Polyisocyanate;
(2) eine oder mehrere Verbindungen, die im Durchschnitt mehr als eine isocyanatreaktive Verbindung enthalten;
(3) ein Dispersionstriol, das bezogen auf das Gewicht der Dispersion zu 10 bis 60 Gewichtsprozent Partikel eines organischen Polymers, das mit den isocyanatreaktiven Verbindungen und den Polyisocyanaten nicht reagiert, mit einer Partikelgröße von weniger als 5 Mikrometer in einem Triol mit einem Molekulargewicht von 4 000 g/mol bis 8 000 g/mol und einer Hydroxylzahl von 30 bis 75 enthält;

wobei das Präpolymer einen Gehalt an freiem Isocyanat von mehr als 2,2 bis 15 Prozent aufweist; und
(B) einen Katalysator, der in der Lage ist, die Reaktion von Isocyanatanteilen mit Wasser zu katalysieren.

**10.** Ein Verfahren zum Aneinanderbinden von zwei Substraten, beinhaltend das In-Kontakt-Bringen der Klebstoffzusammensetzung gemäß Anspruch 9 mit mindestens einem der Substrate und das Miteinander-in-Kontakt-Bringen der Substrate entlang dem Abschnitt des Substrats/der Substrate, auf den die Klebstoffzusammensetzung aufgebracht worden ist, bevor die aufgebrachte Zusammensetzung aushärtet, und das Zulassen, dass die Zusammensetzung aushärtet und die Substrate aneinanderbindet.

**Revendications**

**1.** Un prépolymère polyuréthane comprenant le produit de la réaction :

(A) d'un ou de plusieurs polyisocyanates ;
(B) d'un ou de plusieurs composés contenant en moyenne plus d'un composé réactif aux isocyanates ;
(C) d'un triol de dispersion contenant de 10 à 60 pour cent en poids, rapporté au poids de la dispersion, de particules d'un polymère organique qui est non réactif avec les composés réactifs aux isocyanates et les polyisocyanates ayant une taille de particule de moins de 5 microns dans un triol ayant une masse moléculaire allant de 4 000 g/mol à 8 000 g/mol et un indice d'hydroxyle allant de 30 à 75 ;

le prépolymère ayant une teneur en isocyanate libre allant de plus de 2,2 à 15 pour cent.

**2.** Le prépolymère polyuréthane de la revendication 1 où le prépolymère a au moins une caractéristique parmi une teneur en isocyanate libre allant de 2,2 à 15 pour cent en poids, une masse moléculaire moyenne en poids allant de 3 000 à 20 000 g/mole, et une viscosité de plus de 3 Pa.s et de moins de 20 Pa.s (de plus de 3 000 et de moins de 20 000 centipoises), telle que mesurée à l'aide d'un viscosimètre Brookfield, modèle RVT à 22,2 °C et 50 % HR en utilisant un mobile N° 5 à une 1 révolution par seconde.

**3.** Le prépolymère polyuréthane de la revendication 1 ou de la revendication 2 dans lequel le polyisocyanate est un polyisocyanate aromatique ou cycloaliphatique.

**4.** Le prépolymère polyuréthane de n'importe lesquelles des revendications précédentes dans lequel le constituant polyisocyanate constitue de 5 à 20 pour cent en poids.

**5.** Le prépolymère polyuréthane de n'importe lesquelles des revendications précédentes dans lequel le composé réactif aux isocyanates est un polyol.

**6.** Le prépolymère polyuréthane de n'importe lesquelles des revendications précédentes dans lequel le composé réactif aux isocyanates constitue de 30 à 80 pour cent en poids.

**7.** Le prépolymère polyuréthane de n'importe lesquelles des revendications précédentes dans lequel les particules du triol de dispersion comprennent une polyurée ou un copolymère de polystyrène-acrylonitrile.

**8.** Le prépolymère polyuréthane de n'importe lesquelles des revendications précédentes dans lequel le triol est un triol à base de polyalkylène.

**9.** Une composition adhésive comprenant :

(A) un prépolymère polyuréthane comprenant :

(1) un ou plusieurs polyisocyanates ;
(2) un ou plusieurs composés contenant en moyenne plus d'un composé réactif aux isocyanates ;
(3) un triol de dispersion contenant de 10 à 60 pour cent en poids, rapporté au poids de la dispersion, de particules d'un polymère organique qui est non réactif avec les composés réactifs aux isocyanates et les polyisocyanates ayant une taille de particule de moins de 5 microns dans un triol ayant une masse moléculaire allant de 4 000 g/mol à 8 000 g/mol et un indice d'hydroxyle allant de 30 à 75 ;

le prépolymère ayant une teneur en isocyanate libre allant de plus de 2,2 à 15 pour cent ; et
(B) un catalyseur capable de catalyser la réaction de parties isocyanate avec de l'eau.

**10.** Un procédé pour lier deux substrats l'un avec l'autre, lequel comprend le fait de mettre en contact la composition adhésive de la revendication 9 avec au moins un des substrats et le fait de mettre en contact les substrats l'un avec l'autre le long de la portion du ou des substrats sur laquelle la composition adhésive a été appliquée avant que la composition appliquée ne prenne et de laisser la composition prendre et lier les substrats l'un avec l'autre.

FIG. 1

Exo Up

Universal V4 5A
TA Instruments

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US P5922809 A
- WO 200212365 A
- GB 874430 A
- GB 848671 A
- DE 1157601
- DE 1092007
- US P3492330 A
- GB 994890 A
- BE 761626
- NL 7102524
- DE 1022789
- DE 1222067
- DE 1027394
- DE 1929034
- DE 2004048
- BE 752261
- US P3394164 A
- DE 1230778
- DE 1101392
- GB 889050 A
- FR 7017514
- BE 723640
- GB 965474 A
- GB 1072956 A
- US P3567763 A
- DE 1231688
- DE 1072385
- US P4910279 A
- US P42699945 B
- US 4218543 A
- US 4374210 A
- US P4390645 A
- US 4463107 A
- US 4148840 A
- US 4574137 A
- US P2727884 A
- US 4782127 A
- US P5242984 A
- US 5134968 A
- US P4525511 A
- US 3707521 A
- US 3779794 A

### Non-patent literature cited in the description

- **WOHLER.** *Journal of the American Chemical Society,* 1927, vol. 49, 3181